# EUROPEAN PATENT APPLICATION

(11) **EP 2 600 574 A1**
(43) Date of publication of application: **05.06.2013**
(21) Application number: 11812519.4
(22) Date of filing: 27.07.2011
(51) Int. Cl.: H04L 12/66, H04L 12/46

(54) **COMMUNICATION SYSTEM, CONTROL APPARATUS AND CONTROL PROGRAM**

(30) Priority: 27.07.2010 JP 2010168361
(71) Applicant: Panasonic Corporation, Osaka 571-8501 (JP)
(72) Inventor: HASHIGUCHI, Akira, Osaka 540-6207 (JP)
(74) Representative: Müller-Boré & Partner Patentanwälte
(86) International application number: PCT/JP2011/067078
(87) International publication number: WO 2012/014930

(57) **Abstract**

In a communication system in which a terminal 1 connected to an internal network 5 communicates with an external network 9 through a control device 2 which controls communication, the control device 2 includes an address registration unit 33 which registers a pair of an address of the terminal 1 and an ID, a storage unit 21 which stores a filtering rule that defines a condition to permit or deny the communication of the terminal 1, and a filter unit 22 which determines whether communication of a packet should be permitted or denied, based on a result of comparison between information stored in an address storage area of the packet transmitted from the terminal, and the filtering rule, when the registered ID is contained in the address storage area of the packet, thereby controlling communication of the pack.

## Description

### TECHNICAL FIELD

The present invention relates to a communication system, a control device, and a control program, which have a low processing load.

### BACKGROUND ART

A main function of a packet filtering device is and executing processing to transfer and block a packet, after determining whether to permit or deny the packet to pass therethrough by using a "transmission source address", a "transmission destination address", and a "protocol number" included in an IP header, and a "transmission source port number", a "transmission destination port number" and so on included in a TCP/UDP header.

Since IPsec is implemented in IPv6 as standard, encrypted communication is carried out more often in each terminal along with spread of IPv6 networks. When encryption is carried out by using IPsec, an IP packet payload is encrypted. Therefore, a conventional packet filtering device is unable to be used for such encrypted communication. Thus, a filtering method in which filtering is performed by decrypting encrypted communication (Patent Literature 1), and a filtering method in which a negotiation is converted into a plaintext and filtering is performed based on the information (Patent Literature 2) are proposed.

### CITATION LIST

### PATENT LITERATURES

Patent Literature 1: Japanese Patent Application Publication No. 2006-33707
Patent Literature 2: Japanese Patent Application Publication No. 2005-175825

### SUMMARY OF INVENTION

However, in a case where decryption is performed by a filtering device, an increase in processing load is caused. In a case of the method in which negotiation information is exchanged in advance, negotiation processing is added to each encrypted communication session, thus causing an increase in processing load.

An object of the present invention is to provide a communication system, a control device, and a control program, in which filtering is executed with a low processing load even when information to be filtered is encrypted.

In order to achieve the above-mentioned object, a gist of a first aspect of the present invention resides in a communication system in which a terminal connected to an internal network communicates with an external network through a control device which controls the communication, where the control device includes an address registration unit which registers a pair of an address of the terminal and an ID, a storage unit which stores a filtering rule which defines a condition to permit or deny the communication of the terminal, and a filter unit which determines whether to permit or deny a packet to pass, based on a result of comparison between information stored in an address storage area of the packet transmitted from the terminal and the filtering rule, when the registered ID is contained in the address storage area of the packet.

In the communication system according to the first aspect of the present invention, in a case where the filter unit determines that the communication of the packet having the address storage area which contains the registered ID is permitted, the control device converts information stored in the address storage area into an address which is associated with the ID stored in the address storage area.

In the communication system according to the first aspect of the present invention, the filtering rule has a transmission destination address contained in the packet, as a condition to permit or deny the communication of the terminal, and the filter unit determines whether the communication of the packet should be permitted or denied, based on a result of comparison between a transmission destination address which is contained in information transmitted from the terminal, and the transmission destination address included in the filtering rule, thereby controlling the communication of the packet.

The communication system according to the first aspect of the present invention further includes an external terminal connected to the external network, where the filtering rule has a transmission source address which is contained in a packet transmitted from the external terminal, as a condition to permit or deny the communication of the terminal, and the filter unit determines whether the communication of the packet transmitted from the external terminal should be permitted or denied, based on a result of comparison between the transmission source address which is contained in the packet transmitted from the external terminal, and the transmission source address included in the filtering rule, thereby controlling communication of the packet transmitted from the external terminal.

In the communication system according to the first aspect of the present invention, the filtering rule has a domain name which is contained in the packet transmitted from the external terminal, as a condition to permit or deny the communication of the terminal, and the filter unit determines whether communication of the packet transmitted from the external terminal should be permitted or denied, based on a result of comparison between the domain name which is contained in the packet transmitted from the external terminal, and the domain name included in the filtering rule, thereby controlling the communication of the packet transmitted from the external terminal.

A gist of a second aspect of the present invention resides in a control device for controlling communication in a communication system in which a terminal connected to an internal network communicates with an external network, the control device including an address registration unit which registers a pair of an address of the terminal and an ID, a storage unit which stores a filtering rule which defines a condition to permit or deny the communication of the terminal, and a filter unit which determines whether to permit or deny a packet to pass, based on a result of comparison between information stored in an address storage area of the packet transmitted from the terminal and the filtering rule, when the registered ID is contained in the address storage area of the packet.

A gist of a third aspect of the present invention resides in a control program for controlling communication in a communication system in which a terminal connected to an internal network communicates with an external network, the control program comprising the steps of registering a pair of an address of the terminal and an ID, storing a filtering rule which defines a condition to permit or deny communication of the terminal, and determining whether to permit or deny the packet to pass, based on a result of comparison between information stored in an address storage area of the packet transmitted from the terminal and the filtering rule, when the registered ID is contained in the address storage area of the packet, thereby controlling the communication of the packet.

### BRIEF DESCRIPTION OF DRAWINGS

Fig. 1 is a schematic block diagram explaining a basic configuration of a communication system according to a first embodiment of the present invention;
Fig. 2 is a schematic block diagram explaining a basic logical configuration of a filtering device provided in the communication system according to the first embodiment of the present invention;
Fig. 3 is a schematic block diagram explaining a basic logical configuration of a client terminal provided in the communication system according to the first embodiment of the present invention;
Fig. 4 is an example of filtering rules used in the communication system according to the first embodiment of the present invention;
Fig. 5 is an example of address information used in the communication system according to the first embodiment of the present invention;
Fig. 6 is an example of filtering information used in the communication system according to the first embodiment of the present invention;
Fig. 7 is an example of a filtering rule used in the communication system according to the first embodiment of the present invention;
Fig. 8 is an example of filtering information used in the communication system according to the first embodiment of the present invention;
Fig. 9 is an example of filtering information used in the communication system according to the first embodiment of the present invention;
Fig. 10 is a sequence diagram explaining an example of a communication control method of the communication system according to the first embodiment of the present invention;
Fig. 11 is a flowchart explaining an operation of the client terminal provided in the communication system according to the first embodiment of the present invention;
Fig. 12 is a flowchart explaining an operation of the filtering device provided in the communication system according to the first embodiment of the present invention;
Fig. 13 is a schematic block diagram explaining a basic configuration of a communication system according to a second embodiment of the present invention;
Fig. 14 is a schematic block diagram explaining basic logical configurations of a controller device and a filtering device provided in the communication system according to the second embodiment of the present invention;
Fig. 15 is a schematic block diagram explaining a basic configuration of a communication system according to another embodiment of the present invention; and
Fig. 16 is a sequence diagram explaining an example of a communication control method of the communication system according to another embodiment of the present invention.

### DESCRIPTION OF EMBODIMENTS

Next, first and second embodiments of the present invention will be explained with reference to the drawings. In the following description of the drawings, same or similar parts will be denoted by same or similar reference numerals. It should be noted, however, that the embodiments set forth below are mere examples of devices and methods, as well as systems using such devices for embodying a technical idea of the present invention, and the technical idea of the present invention is not limited to the devices and methods, and systems using such devices, that are described as examples in the embodiments below. Various changes may be added to the technical idea of the present invention without departing from a technical scope stated in the scope of patent claims.

### (First Embodiment)

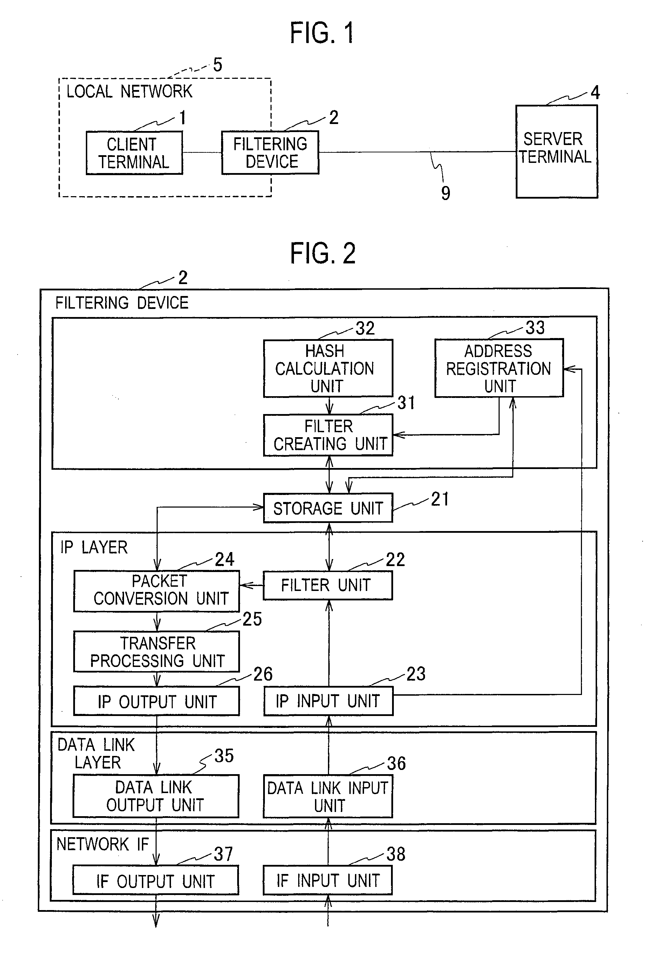

As depicted in Fig. 1, a communication system according to the first embodiment of the present invention includes a client terminal 1 connected to a local network 5, a server terminal 4 connected to an external network 9, and a filtering device 2 which controls communication between the client terminal 1 and the server terminal 4.

The filtering device 2 is located between the local network 5 serving as an internal network, and the external network 9, and works as a communication control device which controls and relays communication between the local network 5 and the external network 9. The client terminal 1 is a communication terminal which is communicably connected to the external network 9, and communicates through the filtering device 2 with the server terminal 4 which works as a communication terminal connected to the external network 9.

As illustrated in Fig. 2, the filtering device 2 includes a filter creating unit 31, a hash calculation unit 32, an address registration unit 33, a storage unit 21, a filter unit 22, and an IP input unit 23, a packet conversion unit 24, a transfer processing unit 25, an IP output unit 26, a data link output unit 35, a data link input unit 36, an IF output unit 37, and an IF input unit 38.

Once the filtering device 2 receives a packet that is communication data, the packet passes the IF input unit 38 which is equivalent to a physical layer, and then the data link input unit 36 which performs processing of a data link layer, and is inputted to the IP input unit 23 which performs processing of an IP layer. The packet inputted to the IP input unit 23 is outputted to the filter unit 22 and the address registration unit 33, respectively.

The address registration unit 33 generates an ID for each IPv6 address of the client terminal 1 from a packet, in accordance with the packet which is sent from the client terminal 1 as a registration request. The ID only needs to be an identifier that is able to identify each ID address, and may be generated from an address or the like contained in a packet by generating a random number or the like. The address registration unit 33 associates the generated ID with the IPv6 address (transmission source address) of the client terminal, and registers the ID and the IPv6 address as address information.

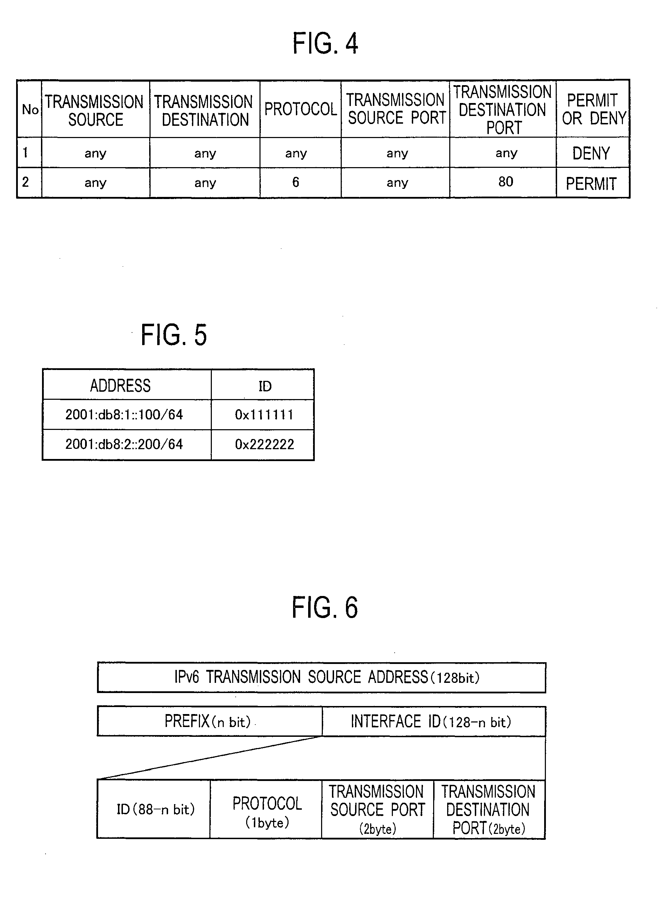

The address registration unit 33 is also able to generate and register an address and an ID of the server terminal 4 which serves as a communication terminal connected to the external network 9. As shown in Fig. 5, the address information contains, for example, a plurality of pairs of a transmission source address of a communication terminal and a generated ID.

Based on inputs and the like from a non-illustrated input device, a medium reading device, and so on, the filter creating unit 31 creates filtering rules used for performing packet filtering. As shown in Fig. 4, each filtering rule is made of, for example, a "transmission source address", a "transmission destination address", a "protocol", a "transmission source port", and a "transmission destination port", as well as other items such as a "domain name", and permit or deny of a packet pass is set in each of the rules. The numbers put in the item "No." show priority of the rules, and the greater the number is, the higher priority application of the corresponding rule is given. The priority of the rules may be arbitrarily determined by the filter creating unit 31. The items contained in each of the filtering rules may be set arbitrarily for each item.

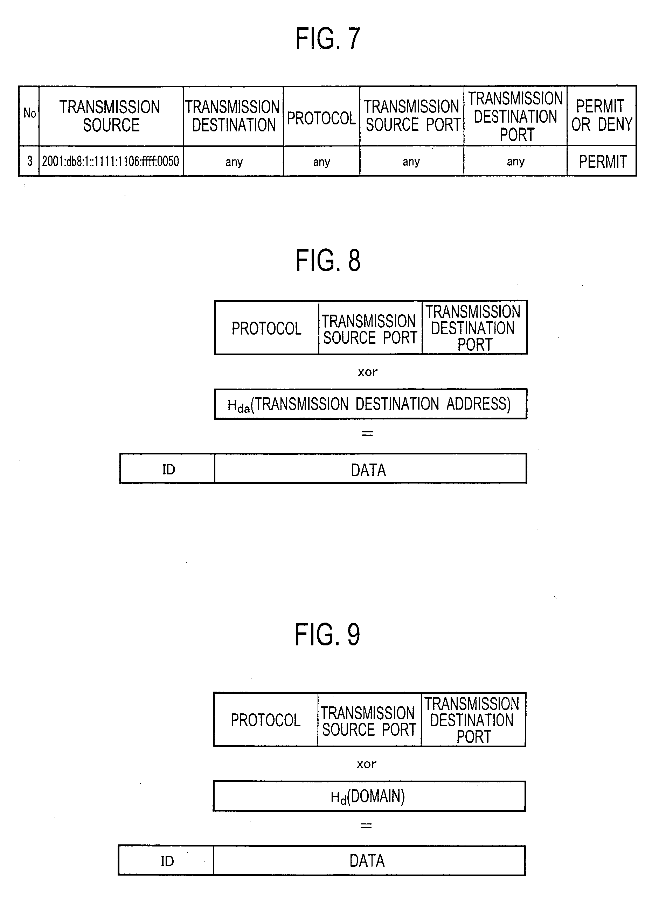

As shown in Fig. 6, the filter creating unit 31 generates filtering information stored in an interface ID field of the transmission source address. The interface ID field is an address storage area of an Ipv6 header. Then, the filter creating unit 31 creates the filtering rules based on the filtering information as shown in Fig. 7. Where a prefix of an IPv6 header is set to n bits, a size of the filtering information is 128 - n bits. The filtering information contains, for example, a protocol number, a transmission source port number, and a transmission destination port number of an IPv4header, which are contained in payload data of an IPv6 packet transmitted from the client terminal 1. An ID generated by the address registration unit 33 is also contained in the filtering information.

When creating a filtering rule for a packet which contains filtering information, a transmission source address of an IPv6 header is, for example, "2001:db8:1::1111:1106:ffff:0050" as shown in Fig. 7, in a case of n = 64 bits. Of this, seeing from the left, "2001:db8:1::" corresponds to a prefix, "111111" corresponds to an ID (24 bits = 88 - n bits), "06" corresponds to a protocol number (1 byte = 8 bits), "ffff" corresponds to a transmission source port number (2 bytes = 16 bits), and "0050" corresponds to a transmission destination port number (2 bytes = 16 bits).

The filtering information may also include a transmission destination address, a domain name, and so on of the client terminal 1. As shown in Fig. 8, in a case where a transmission destination address is included in the filtering information, the hash calculation unit 32 performs hashing of the transmission destination address into a 5-byte hash value using a hash function. An exclusive disjunction of 5-byte information of the filtering information excluding ID and the hash value obtained by hashing the transmission destination address is evaluated, and information obtained by further adding the ID to the exclusive disjunction may be used as the filtering information. In a case where a domain name is included in the filtering information, for example, the hash calculation unit 32 performs hashing of a domain name into a 5-byte hash value by using a hash function, as shown in Fig. 9. An exclusive disjunction of 5-byte information of the filtering information excluding ID and the hash value obtained by hashing the domain name is evaluated, and information obtained by further adding the ID to the exclusive disjunction may be used as the filtering information.

The storage unit 21 stores the address information created by the address registration unit 33, and the filtering rules created by the filter creating unit 31, packets received from outside, and so on.

Once the filter unit 22 receives a packet from the IP input unit 23, the filter unit 22 reads the filtering rules from the storage unit 21, and determines whether to permit or deny the received packet to pass, based on a result of comparison between the information stored in the address storage area of the packet and the filtering rules. When it is determined by the filter unit 22 that the received packet should be denied, the received packet is discarded. When it is determined by the filter unit 22 that the received packet should be permitted, the received packet is transmitted to the packet conversion unit 24.

In a case where a "transmission destination address" of a packet is set as a filtering rule, the filter unit 22 is also able to determine whether to permit or deny the packet to pass, based on a result of comparison between the transmission destination address contained in the packet transmitted from the client terminal 1 and the filtering rules.

Meanwhile, in a case where a "domain name" contained in a packet is set as a filtering rule, the filter unit 22 is able to determine whether to permit or deny the packet to pass, based on a result of comparison between a domain name contained in the packet transmitted from the client terminal 1 and the filtering rules.

When a received packet contains filtering information, the packet conversion unit 24 reads an ID contained in the filtering information of the packet, refers to address information read out from the storage unit 21, and converts the ID into a transmission source address associated with the ID.

A packet transmitted from the packet conversion unit 24 is outputted to outside via the transfer processing unit 25 which executes transfer processing, the IP output unit 26 which executes processing of an IP layer, the data link output unit 35 which executes processing of a data link layer, and then the IF output unit 37 equivalent to a physical layer.

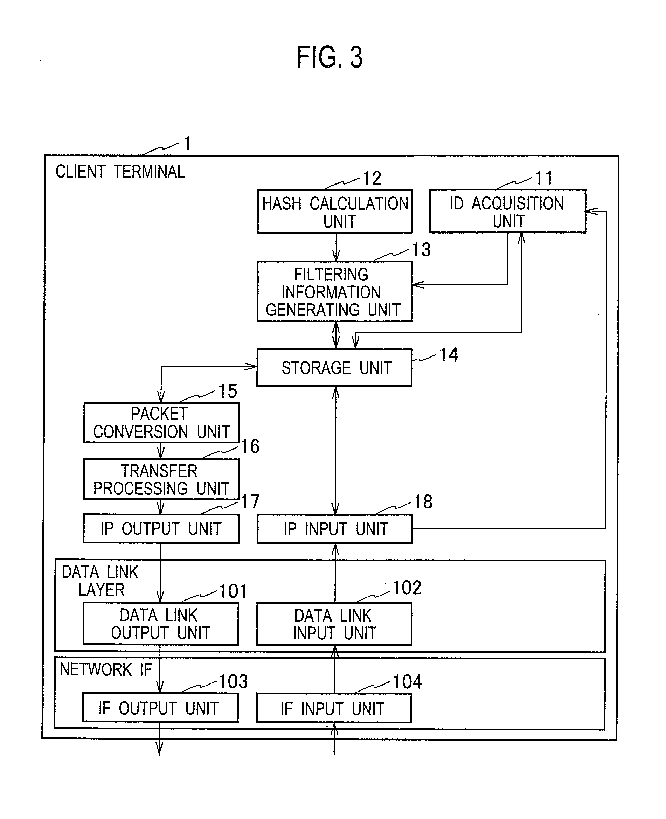

As illustrated in Fig. 3, the client terminal 1 includes an ID acquisition unit 11, a hash calculation unit 12, a filtering information creating unit 13, a storage unit 14, a packet conversion unit 15, a transfer processing unit 16, an IP output unit 17, an IP input unit 18, a data link output unit 101, a data link input unit 102, an IF output unit 103, and an IF input unit 104.

Once the client terminal 1 receives a packet which is communication data, the packet passes the IF input unit 104 that is equivalent to a physical layer, and then the data link input unit 102 which performs processing of a data link layer, and is inputted to the IP input unit 18 which performs processing of an IP layer. The packet inputted in the IP input unit 18 is outputted to the ID acquisition unit 11 and the storage unit 14, respectively.

The ID acquisition unit 11 acquires an ID from the IP input unit 18. The ID is returned by the filtering device 2 to the client terminal 1 in accordance with a registration request received by the filtering device 2 from the client terminal 1. Once the ID acquisition unit 11 acquires the ID from the IP input unit 18, the ID acquisition unit 11 transfers the ID to the filtering information creating unit 13 and the storage unit 14.

In the packet conversion unit 15, an interface ID field in a transmission source address of an IPv6 packet transmitted from the client terminal 1 is converted into filtering information.

As illustrated in Fig. 6, similarly to the filter creating unit 31, the filtering information creating unit 13 creates filtering information which is stored in the interface ID field in the transmission source address of the IPv6 header, and has the storage unit 14 store the filtering information. The filtering information contains, for example, a protocol number, a transmission source port number, a transmission destination port number, and so on of an IPv4 header included in payload data of an IPv6 packet which the client terminal 1 is sending. Also, the ID acquired by the ID acquisition unit 11 is included in the filtering information.

The rest of the description of the filtering information created by the filtering information creating unit 13 is substantially the same as the rest of the description of the filtering information created by the filter creating unit 31 of the filtering device 2, and will thus be omitted to avoid duplication.

The packet conversion unit 15 reads the packet and the filtering information to be transmitted by the client terminal 1 from the storage unit 14, converts the interface ID field in the transmission source address, which is an address storage area of the IPv6 header, into the filtering information, and passes the packet and the filtering information to the transfer processing unit 16.

The packet sent from the packet conversion unit 15 is outputted to outside after passing through the transmission processing unit 16 which performs transfer processing, the IP input unit 17 which performs processing of the IP layer, the data link output unit 101 which performs processing of the data link layer, and then the IF output unit 103 which is equivalent to the physical layer.

### <Communication Control Method>

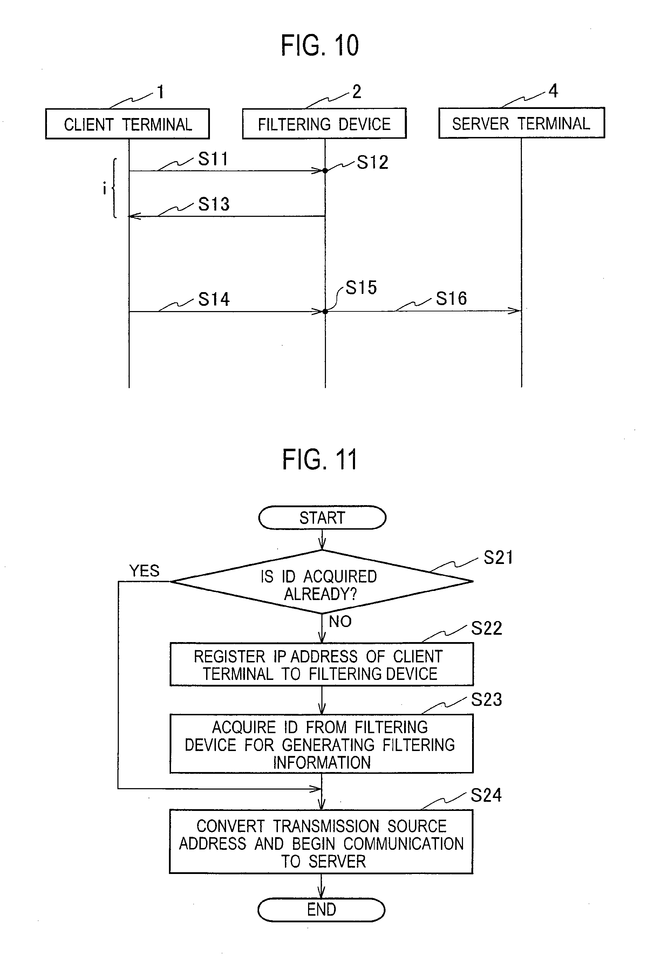

An example of operations carried out by a communication system according to the first embodiment of the present invention will be explained using a sequence diagram shown in Fig. 10.

First, in step S 11, the client terminal 1 transmits a packet to the filtering device 2 as a registration request. Once the filtering device 2 receives the packet from the client terminal 1, the filtering device 2 generates an ID for an IPv6 address of the client terminal 1 and registers a pair of the IPv6 address of the client terminal 1 and the ID as address information in step S12. In step S 13, the filtering device 2 transmits the ID that is associated with the IPv6 address of the client terminal 1 to the client terminal 1.

In step S14, the client terminal 1 converts an interface ID field in a transmission source address of the IPv6 packet into filtering information, and transmits the filtering information towards the server terminal 4.

In step S15, once the filtering device 2 receives a packet containing the filtering information from the client terminal 1, the filtering device 2 reads the ID contained in the filtering information, refers to the address information, converts the filtering information contained in the packet into the IPv6 address associated with the ID that is contained in the filtering information, and then transfers the IPv6 address to the server terminal 4 in step S16.

Of the operations of the communication system according to the first embodiment, the operations i including steps S11 to S13 are initial operations, which may be omitted after the operations are executed for the first time.

### <Operations of Client Terminal>

An example of operations of the client terminal 1 included in the communication system according to the first embodiment of the present invention will be described using a flowchart shown in Fig. 11.

The client terminal 1 previously acquires a transmission source address which is automatically generated by a router advertisement (RA) or manually set.

In step S21, the ID acquisition unit 11 of the client terminal 1 refers to the storage unit 14 and determines whether an ID is already acquired from the filtering device 2. In a case where an ID is already acquired, the process moves to step S24. In a case where an ID is not acquired, the process moves to step S22.

In step S22, the client terminal 1 transmits a packet to the filtering device 2 as a registration request, and an IPv6 address of the client terminal 1 is registered to address information in the filtering device 2. In step S23, the client terminal 1 receives an ID transmitted from the filtering device 2.

In step S24, the client terminal 1 converts the transmission source address into filtering information so that the acquired ID is contained in the filtering information, and begins communication towards the server terminal 4.

### <Operations of Filtering Device>

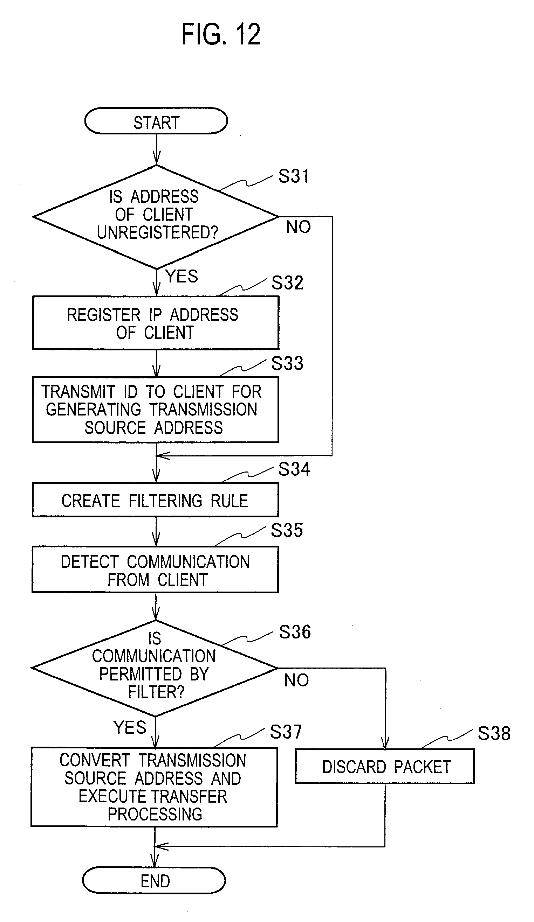

An example of operations of the filtering device 2 included in the communication system according to the first embodiment of the present invention will be explained using a flowchart shown in Fig. 12.

First, in step S31, once the filtering device 2 receives a packet, the address registration unit 33 refers to the storage unit 21 and determines whether a transmission source address of the packet is registered to address information. In a case where the transmission source address of the packet is registered to the address information, the process moves to step S34. In a case where the transmission source address of the packet is not registered to the address information, the process moves to step S32.

In step S32, the address registration unit 33 generates an ID from the transmission source address of the packet, and newly registers the transmission source address and the ID to the address information. Then, the address registration unit 33 transmits the generated ID to the client terminal 1 in step S33.

In step S31, when it is determined that the address of the client terminal 1 is already registered to the address information, the process moves to step S34 in which a filtering rule is created. The filtering rule is able to be created for each ID in the address information.

In step S35, once communication from the client terminal 1 is detected, the filter unit 22 compares the filtering information contained in the packet to the filtering rule, and determines whether to permit or deny the packet to pass. When it is determined that the packet should be permitted to pass, the process moves to step S37 in which the filtering information is converted into the transmission source address, and transfer processing is executed. When it is determined that the packet pass should be denied, the process moves to step S38 in which the packet is discarded. Then the process is ended.

In the communication system according to the first embodiment, since information contained in payload of an IPv6 packet is included in an address storage area for IPv6, filtering is performed from an IPv6 header. Therefore, filtering is executed with less processing. In a case of encrypted communication, a processing load is significantly reduced because decryption processing is not necessary. In addition, when transmitting a packet to an external network, filtering information is converted into a transmission source address by the filtering device. Hence, leakage of information of an internal network is prevented, thereby improving security.

### (Second Embodiment)

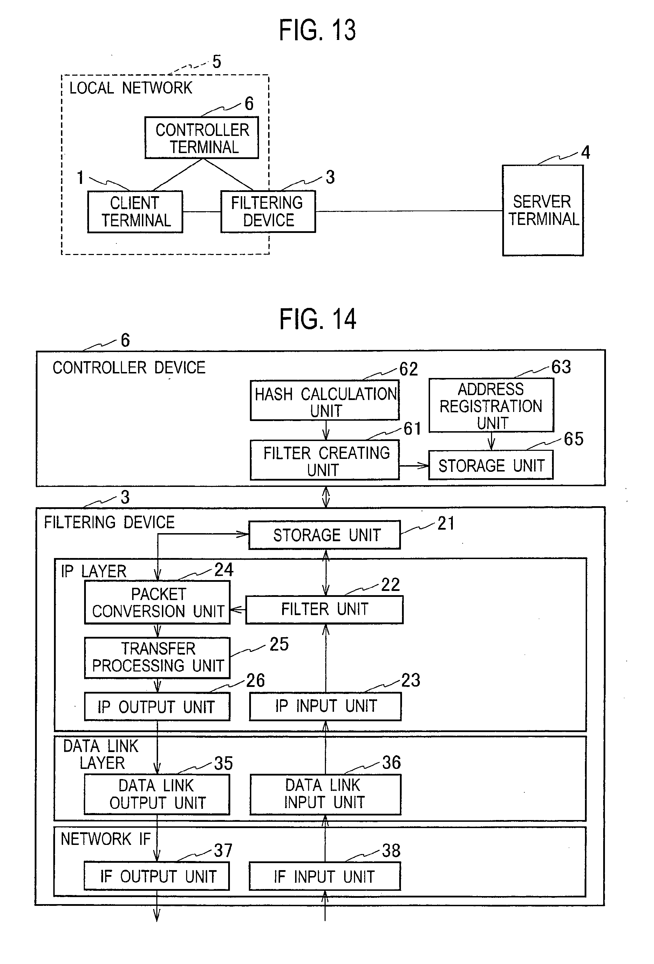

A communication system according to the second embodiment of the present invention is different from the first embodiment in that a controller device 6 connected to a client terminal 1 and a filtering device 3, respectively, is provided as shown in Fig. 13.

As illustrated in Fig. 14, the controller device 6 includes an address registration unit 63, a filter creating unit 61, a hash calculation unit 62, and a storage unit 65, which are substantially the same as the address storage unit 33, the filter creating unit 31, the hash calculation unit 32, the storage unit 21, respectively, of the filtering device 2 included in the communication system shown in Fig. 2 according to the first embodiment, and the descriptions thereof will thus be omitted in order to avoid duplication.

The filtering device 3 includes a storage unit 21, a filter unit 22, an IP input unit 23, a packet conversion unit 24, a transfer processing unit 25, an IP output unit 26, a data link output unit 35, a data link input unit 36, and IF output unit 37, and an IF input unit 38. Each of the units of the filtering device 3 is substantially the same as each of the units of the filtering device 2 shown in Fig. 2 and described in the first embodiment, and the descriptions thereof will thus be omitted to avoid duplication.

In the communication system according to the second embodiment, the address registration unit 63 of the controller device 6 generates an ID from a packet transmitted from the client terminal, registers the address information and transmits the address information to the storage unit 21. Further, a filtering rule is created by the filtering rule creating unit 61, and transmitted to the storage unit 21 of the filtering device. The filter unit 22 reads the filtering rule stored in the storage unit 21, carries out filtering, refers to the address information stored in the storage unit 21, and converts filtering information contained in the packet into a transmission source address of the client terminal 1.

The rest of the configuration which will not be explained in the second embodiment is substantially the same as an authentication system according to the first embodiment, and the description thereof will thus be omitted to avoid duplication.

In the communication system according to the second embodiment, since information contained in payload of an IPv6 packet is included in an address storage area of Pv6, filtering is performed from an IPv6 header. Therefore, filtering is executed with less processing. In a case of encrypted communication, a processing load is remarkably reduced since decryption processing is not necessary. Moreover, when transmitting a packet to an external network, the filtering information is converted into a transmission source address. Hence, leakage of information of an internal network is prevented, thereby improving security.

### (Another Embodiment)

As described so far, the present invention was illustrated in the first and second embodiments. However, it should be understood that the present invention is not limited to the statements and drawings incorporated in the present disclosure. Various alternative embodiments, examples, and operation techniques will be apparent to those skilled in the art from reading of the present disclosure.

In the foregoing first embodiment, the server terminal 4 may be connected to the external network 9 through a filtering device 7 which is the same as the filtering device 2.

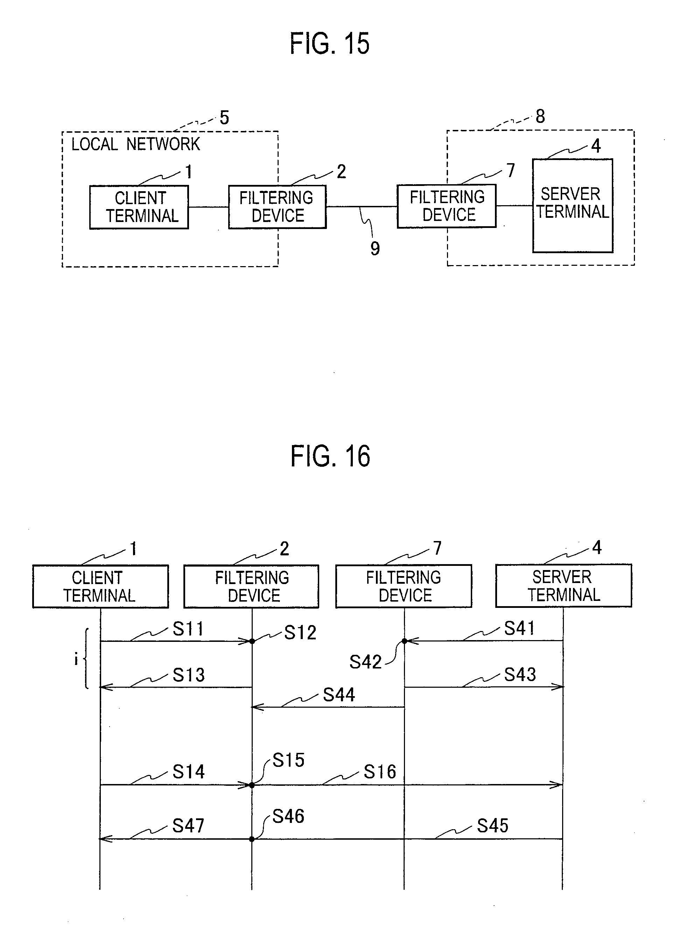

As illustrated in Fig. 15, a communication system according to another embodiment of the present invention is different from the first embodiment in that a server terminal 4 is connected to a local network 8 which serves as an internal network, and is connected to an external network 9 through the filtering device 7.

As illustrated in Fig. 16, the communication system according to another embodiment of the present invention, the server terminal 4 transmits a packet to the filtering device 7 in step S41. Then, in step S42, the filtering device 7 generates an ID from a transmission source address of the packet received, and registers a pair of the transmission source address and the ID as address information. The filtering device 7 transmits the ID to the server terminal 4 in step S43, and transmits the ID and the transmission source address of the server terminal 4 to the filtering device 2 in step S44. The filtering device 2 is able to create filtering information and a filtering rule so that the received ID and the transmission source address is contained in the filtering information and the filtering rule.

In step S45, the server terminal 4 converts the transmission source address of the packet into filtering information which contains the ID, and transmits the filtering information towards the client terminal 1. In step S46, the filtering device 2 determines whether to permit or deny the packet to pass, following the filtering rule created. In a case where the packet is permitted to pass, the filtering information contained in the packet is converted into the transmission source address of the server terminal 4, and is transmitted to the client terminal 1 in step S47. The operations from S11 to S16 are substantially the same as those in the first embodiment, and the descriptions thereof will thus be omitted to avoid duplication.

The present invention is, of course, intended to cover various other embodiments which are not illustrated herein, such as configurations to which the first and second embodiments are applied. Therefore, the technical scope of the present invention is defined only by a matter specifying the invention according to the reasonable scope of patent claims based on the foregoing explanation.

### INDUSTRIAL APPLICABILITY

According to the present invention, since filtering is performed by reading information stored in an address storage area of a packet, a communication system, a control device, and a control program are provided, in which filtering is executed with a low processing load even when information to be filtered is encrypted.

### REFERENCE SIGNS LIST

| | |
|---|---|
| 1 | CLIENT TERMINAL |
| 2, 3, 7 | FILTERING DEVICE |
| 4 | SERVER TERMINAL |
| 5, 8 | LOCAL NETWORK |
| 6 | CONTROLLER DEVICE |
| 9 | EXTERNAL NETWORK |
| 11 | ID ACQUISITION UNIT |
| 12, 32, 62 | HASH CALCULATION UNIT |
| 13 | FILTERING INFORMATION CREATEING UNIT |
| 14, 21, 65 | STORAGE UNIT |
| 15, 24 | PACKET CONVERSION UNIT |
| 16, 25 | TRANSFER PROCESSING UNIT |
| 17, 26 | IP OUTPUT UNIT |
| 18, 23 | IP INPUT UNIT |
| 17, 26 | IP OUTPUT UNIT |
| 22 | FILTER UNIT |
| 31, 61 | FILTER CREATING UNIT |
| 33, 63 | ADDRESS REGISTRATION UNIT |
| 35, 101 | DATA LINK OUTPUT UNIT |
| 36, 102 | DATA LINK INPUT UNIT |
| 37, 103 | IF OUTPUT UNIT |
| 38, 104 | IF INPUT UNIT |

## Claims

1. A communication system in which a terminal connected to an internal network communicates with an external network through a control device which controls the communication, wherein
the control device includes:
an address registration unit which registers a pair of an address of the terminal and an ID;
a storage unit which stores a filtering rule which defines a condition to permit or deny the communication of the terminal; and
a filter unit which determines whether to permit or deny a packet to pass, based on a result of comparison between information stored in an address storage area of the packet transmitted from the terminal and the filtering rule, when the registered ID is contained in the address storage area of the packet.

2. The communication system according to claim 1, wherein, in a case where the filter unit determines that the communication of the packet having the address storage area which contains the registered ID is permitted, the control device converts information stored in the address storage area into an address which is associated with the ID stored in the address storage area.

3. The communication system according to claim 2, wherein
the filtering rule has a transmission destination address contained in the packet, as a condition to permit or deny the communication of the terminal, and
the filter unit determines whether the communication of the packet should be permitted or denied, based on a result of comparison between a transmission destination address which is contained in information transmitted from the terminal, and the transmission destination address included in the filtering rule, thereby controlling the communication of the packet.

4. The communication system according to claim 3, further comprising an external terminal connected to the external network, wherein
the filtering rule has a transmission source address which is contained in a packet transmitted from the external terminal, as a condition to permit or deny the communication of the terminal, and
the filter unit determines whether the communication of the packet transmitted from the external terminal should be permitted or denied, based on a result of comparison between the transmission source address which is contained in the packet transmitted from the external terminal, and the transmission source address included in the filtering rule, thereby controlling communication of the packet transmitted from the external terminal.

5. The communication system according to claim 4, wherein
the filtering rule has a domain name which is contained in the packet transmitted from the external terminal, as a condition to permit or deny the communication of the terminal, and
the filter unit determines whether communication of the packet transmitted from the external terminal should be permitted or denied, based on a result of comparison between the domain name which is contained in the packet transmitted from the external terminal, and the domain name included in the filtering rule, thereby controlling the communication of the packet transmitted from the external terminal.

6. A control device for controlling communication in a communication system in which a terminal connected to an internal network communicates with an external network, the control device comprising:
an address registration unit which registers a pair of an address of the terminal and an ID;
a storage unit which stores a filtering rule which defines a condition to permit or deny the communication of the terminal; and
a filter unit which determines whether to permit or deny a packet to pass, based on a result of comparison between information stored in an address storage area of the packet transmitted from the terminal and the filtering rule, when the registered ID is contained in the address storage area of the packet.

7. A control program of a control device for controlling communication in a communication system in which a terminal connected to an internal network communicates with an external network, the control program comprising the steps of:
registering a pair of an address of the terminal and an ID;
storing a filtering rule which defines a condition to permit or deny communication of the terminal; and
determining whether to permit or deny a packet to pass, based on a result of comparison between information stored in an address storage area of the packet transmitted from the terminal and the filtering rule, when the registered ID is contained in the address storage area of the packet, and controlling the communication of the packet.
